**Europäisches Patentamt**

**European Patent Office**

**Office européen des brevets**

(11) Veröffentlichungsnummer: **0 093 356**
**B1**

(12) **EUROPÄISCHE PATENTSCHRIFT**

(45) Veröffentlichungstag der Patentschrift: **23.03.88**

(21) Anmeldenummer: **83103999.5**

(22) Anmeldetag: **23.04.83**

(51) Int. Cl.⁴: **B 29 B 7/32**

---

(54) **Mischvorrichtung für Mehrkomponentenkunststoffe.**

---

(30) Priorität: **04.05.82 DE 3216647**

(43) Veröffentlichungstag der Anmeldung:
**09.11.83 Patentblatt 83/45**

(45) Bekanntmachung des Hinweises auf die
Patenterteilung:
**23.03.88 Patentblatt 88/12**

(84) Benannte Vertragsstaaten:
**DE FR GB IT**

(56) Entgegenhaltungen:
**DE-B-1 948 999**
**DE-B-2 245 082**
**DE-B-2 364 501**
**US-A-4 314 963**

(73) Patentinhaber: **Elastogran Maschinenbau GmbH**
**Mitterstrassweg**
**D-8021 Strasslach (DE)**

(72) Erfinder: **Taubenmann, Peter**
**Strindbergstrasse 1**
**D-8000 Muenchen 60 (DE)**

(74) Vertreter: **Rämisch, Friedrich, Dr. et al**
**Carl-Bosch-Strasse 38**
**D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 093 356 B1

## Beschreibung

Die Erfindung betrifft eine Mischvorrichtung für Mehrkomponentenkunststoffe gemäß Oberbegriff des Patentanspruchs 1.

Bei Mischvorrichtungen der genannten Art (US—PS 3 263 928) wird die Dosierung der Komponenten in die Mischkammer häufig mittels an den einander gegenüberliegenden Eintrittsöffnungen angesetzten Düsen vorgenommen. Dabei wird Druckenergie in Bewegungsenergie umgesetzt, so daß die einzelnen Komponenten mit hoher Geschwindigkeit in der Mischkammer zusammentreffen, sich vermischen und ausgestoßen werden. Der in der Mischkammer angeordnete Steuerkolben dient einmal als Schließorgan für die Eintrittsöffnungen — bei vorgesehenen Rücklaufnuten (DE—OS 2 007 935) zusätzlich als Umsteuerorgan zur Rezirkution der Komponenten in der Schließstellung — und zum anderen als Reinigungskolben für die Mischkammer und die Austrittsöffnung.

Bei schwierig zu verarbeitenden Kunststoffkomponenten können Probleme bezüglich einer ausreichenden Mischgüte auftreten, was erfahrungsgemäß auf die Länge der Mischkammer zurückzuführen ist. Diese war bisher auf ein Mindestmaß beschränkt, das durch den Platzbedarf für die seitlich angeordneten Düsenkörper mit den dazu notwendigen Verschraubungen und für ein gewöhnlich vorgesehenes, in die trichterförmige Öffnung des Formwerkzeuges eintauchbares Auslaufrohr gegeben ist. Dabei werden beim Eintauchen des Auslaufrohres in die in der Teilungsebene des Formwerkzeugs angeordneten Öffnung die beiden Formhälften infolge des Anpressens des Auslaufrohres an die Form auseinandergedrängt. Dies hat häufig Undichtigkeiten zur folge, insbesondere bei geringer Schließkraft der Formhälften oder bei verschmutzten oder beschädigten Teilungsflächen.

Die unzureichende Vermischung der Kunststoffkomponenten bei längeren Mischkammern ist darauf zurückzuführen, daß Teile der mit hoher Geschwindigkeit in den Mischraum eintretenden Komponenten sehr schnell zur Austrittsöffnung der Mischkammer gelangen, ohne im Bereich zwischen den Eintrittsöffnungen bzw. Düsen einer ausreichenden Vermischung unterzogen worden zu sein. Dementsprechend kann die Mischgüte verbessert werden, wenn der Mischkammerraum auf diesen Bereich abgestimmt wird, da die eingebrachten Strömungsturbulenzen sich in einem kleineren Raum besser in Mischleistung umsetzen als in einem größeren Raum.

Demgemäß bestand die Aufgabe, eine Mischvorrichtung der eingangs geschilderten Art zu entwickeln, bei der die Mischkammer möglichst kurz gestaltet ist, d.h. sich im wesentlichen auf den Eintrittsbereich der zu vermischenden Kunststoffkomponenten beschränkt, wobei während des Zusammenwirkens mit einem Formwerkzeug ein dichtes Schließen dessen Formhälften gewährleistet sein soll.

Zur Lösung der Aufgabe wird eine Mischvorrichtung für Mehrkomponentenkunststoff vorgeschlagen, die mit einer Mischkammer, die Eintrittsöffnungen für die einzelnen Komponenten und eine Austrittsöffnung für das Komponentengemisch besitzt, einem in der Mischkammer angeordneten Steuerkolben, der zwischen einer die Eintrittsöffnungen offenlassenden Stellung und einer diese absperrenden Stellung hin- und herbewegbar ist, und mit einem an die Austrittsöffnung sich anschließenden Eintrittskanal in das Formwerkzeug ausgestattet ist. Erfindungswesentlich ist dabei, daß der Eintrittskanal einen geringeren Querschnitt als die Austrittsöffnung der Mischkammer aufweist, wobei die Austrittsöffnung zum Formwerkzeug hin konisch erweitert ist und das den Eintrittskanal aufweisende Teil des Formwerkzeugs einen in den Konus der Austrittsöffnung eintauchbaren Kegelstumpf aufweist.

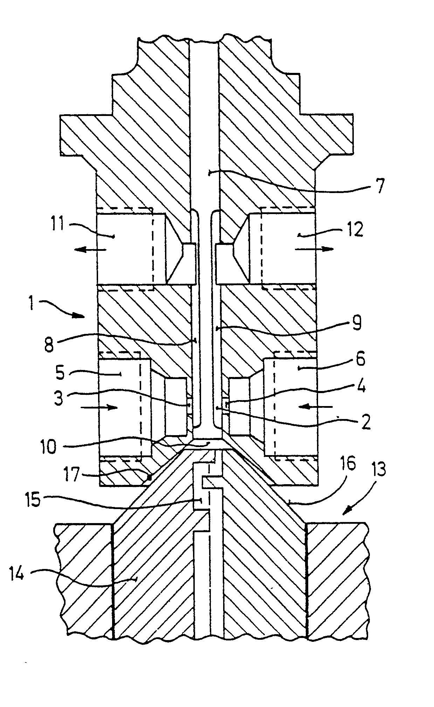

Weitere Einzelheiten und Vorteile der erfindungsgemäßen Mischvorrichtung ergeben sich aus der nachfolgenden Beschreibung eines in der Zeichnung dargestellten Ausführungsbeispiels.

In der Zeichnung ist die Mischvorrichtung im Längsschnitt schematisch wiedergegeben. Sie besteht aus einem Gehäuse 1, in dem eine im allgemeinen kreiszylindrische Mischkammer 2 ausgebildet ist. In die Mischkammer führen Eintrittsöffnungen 3 und 4, an denen direkt oder über Düsen 5 und 6 Vorlaufleitungen für die Zuführung der Komponenten angeschlossen sind. Mit 7 ist ein Steuerkolben bezeichnet, der in der Mischkammer hin- und herbewegbar ist, um den Einlauf der Kunststoffkomponenten zu steuern und gleichzeitig die Mischkammer zu reinigen. Der in der Zeichnung in seiner unteren Endstellung dargestellte Kolben mit Rücklaufnuten 8 und 9 wird durch eine in der Zeichnung nicht dargestellte hydraulische Kolben-Zylinder-Einheit betätigt und ist bis in den Bereich der Austrittsöffnung 10 der Mischkammer verfahrbar. In dieser sogennten Rezirkulationsstellung treffen die Kunststoffkomponenten nicht aufeinander, sondern werden über die Rücklaufnuten durch Öffnungen 11 und 12 wieder zu Vorratsbehältern zurückgeführt. Für den Mischbetrieb wird der Steuerkolben zurückgezogen, so daß die Eintrittsöffnungen offen sind.

Gemäß der Erfindung ist die Austrittsöffnung 10 nahe dem Mischkammerbereich zwischen den Eintrittsöffnungen 3 und 4 angeordnet und zum Formwerkzeug 13 hin konisch erweitert. Dadurch bleibt einerseits noch genügend Raum zum Einbau der Düsen 5 und 6, andererseits kann ein in der Teilungsebene des Formwerkzeugs angeordnetes Teil 14, das den Eintrittskanal 15 in das Formwerkzeug, der einen geringeren Querschnitt als die Austrittsöffnung 10 der Mischkammer 2 hat, aufweist, mit seinem über dieses vorstehenden Kegelstumpf 16 in die konische Erweiterung 17 der Austrittsöffnung eintauchen und dadurch bis unmittelbar an die Austrittsöffnung gebracht werden. Für ein dichtes Anliegen des Kegelstumpfes an der Konusfläche der Erweiterung 17 ist zwischen diesen ein Freiwinkel vorgesehen, beispielsweise gebildet durch 100° beim Konuswinkel und 90° beim Kegelwinkel, so daß sich eine linienförmige Berührung mit hoher Flächenpressung ergibt.

Durch die vorstehend erläuterten konstruktiven Maßnahmen ist neben der Verkürzung der Mischkammer in vorteilhafter Weise erreicht, daß die beiden Formhälften von der Mischvorrichtung über den geteilten Kegelstumpf zusammengespannt werden und somit deren dichtes Schließen unterstützt wird.

In vorteilhafter Ausgestaltung der erfindungsgemäßen Mischvorrichtung ist der Eintrittskanal 15 im Teil 14, der über einen Augußkanal mit dem eigentlichen Formnest verbunden ist, in seinem Querschnitt gegenüber der Austrittsöffnung 10 der Mischkammer 2 wesentlich reduziert und weist mehrfache Umlenkungen und Querschnittsveränderungen auf, um durch die damit hervorgerufenen Änderungen der Strömungsverhältnisse eine Nachvermischung des Komponentengemisches zu erreichen.

## Patentansprüche

1. Mischvorrichtung für Mehrkomponentenkunststoffe mit einer Mischkammer (2), die Eintrittsöffnungen (3, 4) für die einzelnen Komponenten und eine Austrittsöffnung (10) für das Komponentengemisch besitzt, einem in der Mischkammer angeordneten Steuerkolben (7), der zwischen einer die Eintrittsöffnungen offenlassenden Stellung und einer diese absperrenden Stellung hin- und herbewegbar ist, und mit einem an die Austrittsöffnung sich anschließenden Eintrittskanal (15) in das Formwerkzeug (13), dadurch gekennzeichnet, daß der Eintrittskanal (15) einen geringeren Querschnitt als die Austrittsöffnung (10) der Mischkammer (2) aufweist, wobei die Austrittsöffnung (10) zum Formwerkzeug (13) hin konisch erweitert ist und das den Eintrittskanal (15) aufweisende Teil (14) des Formwerkzeugs einen in den Konus (17) der Austrittsöffnung eintauchbaren Kegelstumpf (16) aufweist.

2. Mischvorrichtung nach Anspruch 1, dadurch gekennzeichnet, daß der Eintrittskanal (15) mehrfache Umlenkungen und Querschnittsänderungen aufweist.

3. Mischvorrichtung nach Anspruch 1 und 2, dadurch gekennzeichnet, daß der Konus (17) der Austrittsöffnung (10) und der Kegelstumpf (16) des Teils (14) einen Freiwinkel bilden.

## Revendications

1. Dispositif mélangeur pour matières plastiques à plusieurs composants, comportant une chambre de mélange (2), à orifices d'entrée (3, 4) pour les différents composants et orifice de sortie (10) pour le mélange de composants, un piston de commande (7) disposé dans la chambre de mélange et qui peut se déplacer alternativement entre une position laissant ouverts les orifices d'entrée et une position obturant ceux-ci, et un canal d'entrée (15) dans l'outil de formage (13) se raccordant à l'orifice de sortie, caractérisé par le fait que le canal d'entrée (15) possède une section plus petite que l'orifice de sortie (10) de la chambre de mélange (2), ledit orifice de sortie (10) s'élargissant coniquement en direction de l'outil de formage (13) et la partie (14) de l'outil de formage présentant le canal d'entrée (15) possède un bord tronconique (16) qui peut être introduit dans le cône (17) de l'orifice de sortie.

2. Dispositif mélangeur selon la revendication 1, caractérisé par le fait que le canal d'entrée (15) présente plusieurs changements de direction et variations de section.

3. Dispositif mélangeur selon les revendications 1 et 2, caractérisé par le fait que le cône (17) de l'orifice de sortie (10) et le bout tronconique (16) de la partie (14) forment un angle d'incidence, ou de dépouille.

## Claims

1. A device for mixing multicomponent plastics materials, comprising a mixing chamber (2); inlets (3, 4) for the individual components, and an outlet (10) for the mixture of components; a control piston (7) which is arranged in the mixing chamber and can be moved to and fro between a position in which the inlets are left open, and a position in which they are sealed off; and an inlet channel (15) into which the outlet merges and which leads into the mould (13), wherein the inlet channel (15) is of smaller cross section than the outlet (10) of the mixing chamber (2), the outlet (10) leading to the mould (13) being conically flared towards the mould (13), and the part (14) of the mould incorporating the inlet channel (15) having the shape of a truncated cone (16) which can be inserted into the conically flared portion (17).

2. A mixing device as claimed in claim 1, wherein the inlet channel (15) changes its direction and cross section a number of times.

3. A mixing device as claimed in claims 1 and 2, wherein the conically flared portion (17) of the outlet (10) and the truncated cone (16) of part (14) form an acute angle.